# FASCICULE DE BREVET EUROPEEN

(11) **EP 0 688 724 B1**
(45) Date de publication et mention de la délivrance du brevet: **22.04.1998**
(21) Numéro de dépôt: 95401350.4
(22) Date de dépôt: 12.06.1995
(51) Int. Cl.: B65D 41/34, B29C 57/00, B29C 53/00

(54) **Perfectionnement à un procédé de fabrication d'un dispositif de bouchage et machine pour sa mise en oeuvre**
Verbesserung des Verfahrens zum Herstellen einer Verschlussvorrichtung und Maschine dafür
Improved method of producing a closure device and machine for its implementation

(30) Priorité: 21.06.1994 FR 9407566
(43) Date de publication de la demande: 27.12.1995
(73) Titulaire: LE MOULAGE AUTOMATIQUE (Société anonyme), F-02400 Château-Thierry (FR)
(72) Inventeur: Franchet, Alain, F-02400 Brasles (FR); Guerrazzi, Vincent, F-01500 Amberieu en Bugey (FR); Pellerano, Pierre, F-75017 Paris (FR)
(74) Mandataire: Derambure, Christian

(56) Documents cités:
- WO-A-91/11369
- FR-A- 2 701 248
- US-A- 4 890 754

## Description

La présente invention concerne un perfectionnement au procédé de fabrication d'un dispositif de bouchage pour récipient à collerette ainsi qu'une machine pour la mise en oeuvre continue du procédé.

Les dispositifs de bouchage qui sont visés plus particulièrement par ce procédé sont ceux qui sont constitués d'un bouchon taraudé prolongé en partie inférieure par une bague d'inviolabilité reliée au bouchon par une zone de liaison frangible ; cette bague comportant une bande annulaire de jonction à déformation contrôlée, délimitée d'une part, en partie inférieure par une saillie annulaire interne dont la face supérieure est sensiblement normale à l'axe du dispositif et la face inférieure est inclinée d'un angle aigu par rapport audit axe et, d'autre part, en partie supérieure, par une saillie annulaire externe.

Ces dispositifs ont fait notamment l'objet de demandes de brevet internationales PCT/FR 94/00145 et PCT/FR 94/00144 du même titulaire.

Les procédés de fabrication de tels dispositifs comprennent généralement un moulage par injection ou par compression, un démoulage puis une éjection du dispositif parallèlement à son axe comme décrit dans la demande de brevet internationale n° PCT/FR 94/00144. WO-A-9111369 et US-A-4890754 décrivent également des dispositifs de bouchage et leur formation.

Lors du conditionnement, au premier vissage du dispositif sur le récipient à collerette, après son remplissage, il est nécessaire d'exercer un couple de serrage pour produire la déformation contrôlée de la bande de jonction et l'accrochage du dispositif par encliquetage de la saillie annulaire interne sous la collerette.

Or, plus la saillie interne est large, plus la bande de jonction est épaisse et plus la bague d'inviolabilité est rigide, ce qui renforce le degré d'inviolabilité.

Mais le couple de serrage devient alors relativement important de même que le couple de dévissage qui en dépend en grande partie, ce qui constitue un inconvénient pour le consommateur.

Par conséquent, le problème technique réside dans la recherche d'un compromis satisfaisant entre un dévissage aisé (qui dépend principalement du couple de serrage initial) et un degré d'inviolabilité élevé.

L'invention a pour but de résoudre ce problème de manière satisfaisante.

Ce but est atteint par un procédé de fabrication comprenant le moulage d'un dispositif de bouchage du type précité, son démoulage puis l'éjection parallèlement à son axe, caractérisé en ce qu'on réalise ensuite un préformage de la bague d'inviolabilité en introduisant axialement dans ledit dispositif, un mandrin cylindrique dont le diamètre est légèrement inférieur au diamètre intérieur des filets du bouchon taraudé et qui est pourvu d'une came périphérique annulaire telle que la face inférieure de la saillie annulaire interne vienne en butée contre ladite came puis en exerçant sur ledit dispositif et/ou sur le mandrin un effort d'appui dont la force est suffisante pour assurer une course relative du mandrin dans la bague au contact de la came jusqu'à une position de préformage maintenue pendant un temps déterminé de façon à produire conjointement un cintrage vers l'extérieur de la bande à déformation contrôlée et une flexion rémanente de la saillie annulaire interne vers le bouchon de telle sorte que sa face supérieure reste inclinée d'un certain angle par rapport à la normale à l'axe du dispositif après suppression de l'effort et sortie du mandrin.

Selon une caractéristique avantageuse, l'amplitude du préformage est déterminée de façon à au moins compenser la déformation initiale de la bague, produite lors de l'éjection du moule.

Selon une autre caractéristique, l'inclinaison rémanente de la face supérieure de la saillie annulaire interne par rapport à la normale à l'axe du dispositif est inférieure ou égale à 25° et est, de préférence, comprise entre 10° et 15° tandis que l'inclinaison rémanente de la face latérale extérieure de la partie inférieure de la bague est comprise en 0 et 15° par rapport et vers l'axe du dispositif.

Le cintrage se produit de préférence selon une ligne circulaire située sur la bande de jonction à déformation contrôlée en assurant une orientation sélective des chaînes moléculaires du polymère constitutif de la bague sur cette ligne.

L'effort d'appui peut être exercé indifféremment sur le bouchon et/ou le mandrin avec une durée supérieure ou égale au temps de maintien en position de préformage.

Selon le procédé de l'invention, l'effort d'appui est compris entre 10 et 100 daN et le temps de maintien du mandrin en position de préformage est compris entre 0,3 et 5 s.

Selon une première variante de mise en oeuvre, on réalise le préformage à chaud sur le dispositif dès son éjection du moule.

Selon une seconde variante, on réalise le préformage après éjection du moule pendant ou après refroidissement et retrait complet de la matière constitutive de la bague.

Selon d'autres caractéristiques de l'invention, la force, la durée de l'effort d'appui ainsi que la course relative du mandrin sont déterminées en fonction des caractéristiques mécaniques de la matière constitutive de la bague.

On peut aussi prévoir que la force, la durée de l'effort d'appui et la course relative du mandrin sont déterminées en fonction de la température de la bague au moment du préformage.

On peut encore prévoir que la force, la durée de l'effort d'appui, ainsi que la course relative du mandrin sont déterminées selon les géométries respectives de la saillie annulaire interne et de la bande de jonction à déformation contrôlée par rapport aux profils des collerettes de récipients.

Le préformage selon l'invention du dispositif de bouchage prépare la bague d'inviolabilité en vue de la déformation nécessaire à son encliquetage ultérieur. Il permet ainsi de faciliter le montage sur le récipient, après remplissage, sans compromettre les excellentes propriétés d'étanchéité et d'inviolabilité de ce type de dispositif.

De plus, la déformation rémanente de la bague et, en particulier, la flexion rémanente de la saillie annulaire interne associée au cintrage de la bande annulaire de jonction à déformation contrôlée permet d'obtenir un couple de vissage lors de l'embouteillage et par conséquent un couple d'ouverture par dévissage qui reste faible et adapté aux souhaits des consommateurs.

A couple d'ouverture égal, on peut donc ainsi obtenir une meilleure inviolabilité notamment en utilisant des bagues rendues plus rigides par leur profil et/ou leur matière.

Un autre objet de l'invention est une machine pour la mise en oeuvre continue du préformage de l'invention. Cette machine comprend un distributeur de dispositifs de bouchage avec leur bague d'inviolabilité, des convoyeurs destinés à transférer respectivement lesdits dispositifs d'abord du distributeur à une unité de préformage puis de ladite unité à un réceptacle, caractérisée en ce que ladite unité de préformage comprend - un plateau rotatif autour d'un axe vertical porteur d'une matrice de support et de positionnement des dispositifs destinée à les maintenir fermement avec la bague d'inviolabilité vers le haut - des tiges verticales coulissantes au travers de paliers et dont les extrémités inférieures portent un mandrin cylindrique équipé d'une came périphérique annulaire, destiné à être introduit dans lesdits dispositifs sous l'action de l'effort d'appui exercé par les tiges pour mettre ladite came au contact de la saillie annulaire interne de la bague.

Selon une caractéristique avantageuse, ladite matrice de support et de positionnement est constituée d'un disque comportant plusieurs alvéoles périphériques dans lesquelles sont logés, centrés et retenus les bouchons des dispositifs de bouchage.

La phase de préformage correspond à un secteur angulaire de ladite matrice.

Selon une autre caractéristique, l'extrémité du mandrin est chanfreinée et son profil ainsi que sa géométrie sont déterminés en fonction de la position de la came pour ne jamais venir en contact ni avec le fond, ni avec les parois intérieures du bouchon, lors du préformage.

Selon encore une autre caractéristique, ladite came périphérique annulaire possède une partie utile constituée d'une face active plane et inclinée à bord latéral curviligne se prolongeant par une face inactive dont les profils et les géométries sont adaptés à la face inférieure de la saillie interne de la bague.

Enfin, ladite matrice de support et de positionnement est associée par synchronisation mécanique à des roues dentées rotatives d'alimentation et d'évacuation travaillant en ligne avec les convoyeurs.

L'invention sera mieux comprise à la lecture de la description qui va suivre, accompagnée des dessins sur lesquels :
- la figure 1 représente une vue en coupe d'un dispositif de bouchage à l'état libre avec un mandrin de préformage en position inactive ;
- la figure 2 représente une vue en coupe partielle du dispositif de la figure 1 pendant une première phase du procédé de l'invention ;
- la figure 3 représente une vue en coupe partielle du dispositif précédent pendant la phase de préformage ;
- la figure 4 représente une vue en coupe partielle du dispositif de bouchage des figures 1 à 3 à l'état préformé ; et,
- les figures 5a et 5b représentent respectivement une vue de dessus et une vue en coupe verticale partielle d'un mode de réalisation d'une machine de préformage selon l'invention.

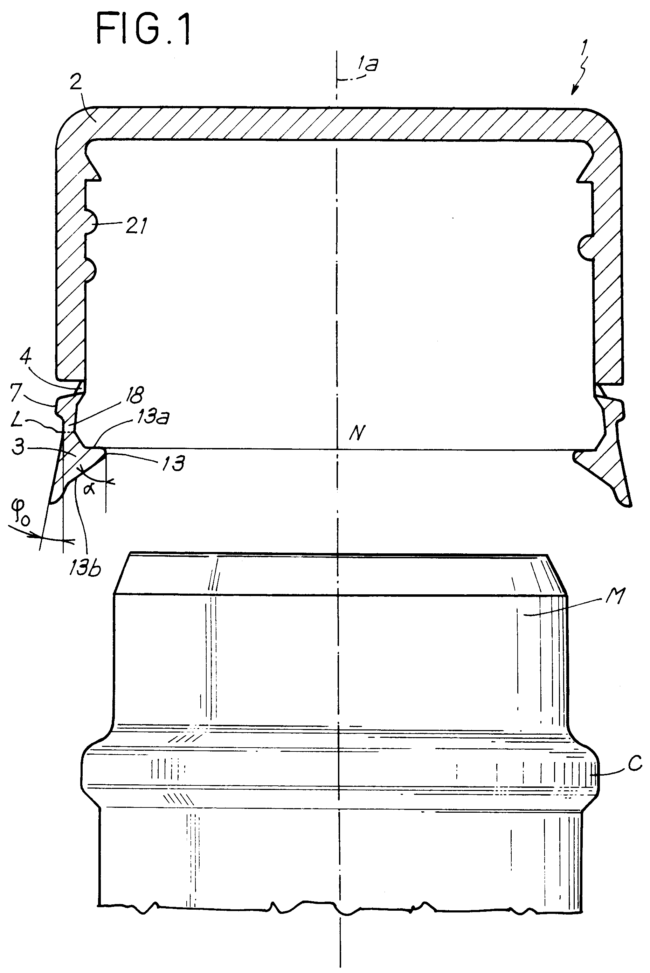

Le dispositif de bouchage 1 représenté sur la figure 1 est constitué d'un bouchon taraudé 2 prolongé en partie inférieure par une bague d'inviolabilité 3 reliée au bouchon 2 par une zone de liaison frangible 4. La bague 3 comporte une bande annulaire déformable 18 de jonction, à déformation contrôlée, délimitée, d'une part, en partie inférieure, par une saillie annulaire interne 13 dont la face supérieure 13a est sensiblement normale à l'axe la du dispositif et la face inférieure 13b est inclinée d'un angle a aigu par rapport à l'axe la et, d'autre part, en partie supérieure, par une saillie annulaire externe 7.

Cette saillie annulaire externe 7 a une largeur sensiblement égale à l'épaisseur du bouchon 2.

La bande annulaire de jonction 18 est située entre la normale N à l'axe la du dispositif passant par la face supérieure 13a de la saillie interne 13 et le bord inférieur de la saillie externe 7.

Le procédé de fabrication comprend les opérations préalables de moulage par injection ou par compression du dispositif 1 dans un moule (non représenté), de démoulage puis d'éjection parallèlement à l'axe 1a.

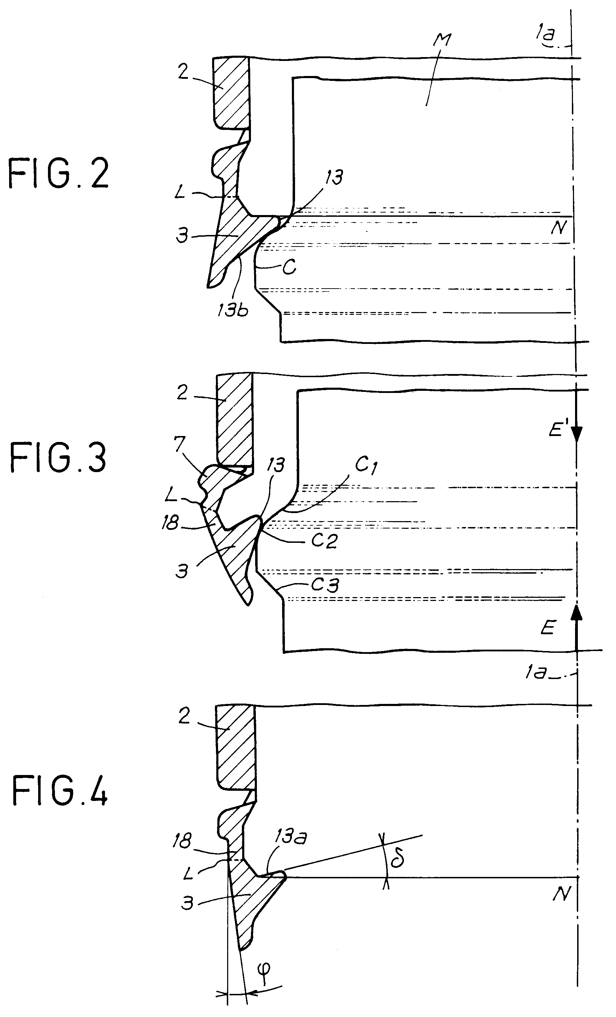

On effectue ensuite, pendant ou après refroidissement et retrait de la matière constitutive de la bague d'inviolabilité 3 ou bien à chaud en sortie de moule, un préformage de ladite bague. Ce préformage est réalisé en introduisant d'abord dans le dispositif 1, et selon son axe la, comme représenté sur la figure 2, un mandrin cylindrique M (déjà représenté en position inactive sur la figure 1) dont le diamètre est légèrement inférieur au diamètre intérieur des filets 21 du bouchon taraudé 2.

Sur les figures 2 et 3, le mandrin M est engagé dans le dispositif de bouchage 1 verticalement et par en dessous mais il est bien sûr possible de mettre en oeuvre le procédé de l'invention selon d'autres positions.

Le mandrin M est pourvu d'une came périphérique annulaire C telle que la face inférieure 13b de la saillie annulaire interne 13 vienne en butée, verticalement contre ladite came C lors de l'introduction du mandrin M.

Selon un autre mode de réalisation (non représenté) la came C est réalisée à l'extrémité supérieure du mandrin M.

L'extrémité du mandrin M est éventuellement chanfreinée comme représenté sur la figure 1.

Puis, on exerce sur le dispositif 1 et/ou sur le mandrin M, comme représenté sur la figure 3, un effort d'appui E,E' selon l'axe la dont la force est suffisante pour assurer, à partir de la position de butée (figure 2) une course relative du mandrin M dans la bague 3 au contact de la came C, jusqu'à une position de préformage. Cette position qui correspond à la fin de course relative du mandrin M, par rapport à la bague 3 entraîne une déformation forcée et contrôlée de ladite bague 3. Dans cette position la saillie externe 7 de la bague 3 est en butée contre le bord inférieur du bouchon 2. La position de préformage est maintenue pendant un temps déterminé de façon à produire conjointement un cintrage vers l'extérieur de la bande 18 de jonction, à déformation contrôlée et une flexion rémanente vers le bouchon 2 de la saillie annulaire interne 13. Il en résulte que la face supérieure 13a de ladite saillie 13 reste inclinée d'un angle δ par rapport à la normale N à l'axe la du dispositif 1 après suppression de l'effort E,E' et sortie du mandrin M comme représenté sur la figure 4.

Dans cette perspective, le profil et la position de la came C du mandrin M sont déterminés pour permettre une butée franche, en début de course, de la face inférieure 13b de la saillie interne 13 de la bague 3 tout en évitant, en fin de course, un encliquetage de ladite saillie.

La partie utile de la came C du mandrin M comprend par exemple une face active plane et inclinée C1 à bord latéral curviligne C2 dont le profil et la géométrie sont adaptés à la face inférieure 13b de la saillie interne 13 pour obtenir la déformation recherchée. Le bord latéral C2 se prolonge, (vers le bas selon l'orientation du bouchon 2 sur les figures 1 à 3), par une face inactive C3 qui ne vient jamais en contact avec le bord inférieur de la bague 3 s'orientant vers l'axe 1a lors du préformage.

Par ailleurs, le profil et la géométrie du mandrin M sont déterminés en fonction de la position de la came C pour qu'il ne vienne jamais en contact ni avec le fond du bouchon 2 ni avec ses parois intérieures et dans ce but il est équipé d'une butée mécanique qui garantit la précision de la course relative nécessaire.

De plus, le profil de la came C du mandrin M est indépendant de la géométrie des collerettes des récipients sur lesquels le dispositif de bouchage 1 est destiné à être monté.

L'amplitude du préformage est déterminé de façon à ce que, l'inclinaison rémanente δ de la face supérieure de la saillie interne 13 compense au moins la déformation initiale produite lors de l'éjection du moule ; c'est à dire que la déformation globale résultant du préformage compense au moins l'écartement angulaire initial ϕₒ par rapport à l'axe la de la face extérieure de la partie inférieure de la bague 3 résultant du démoulage tel que représenté sur la figure 1.

L'écartement angulaire initial ϕₒ commence dans le haut, au voisinage d'une ligne circulaire L située sensiblement à mi-hauteur sur la bande de jonction 18 et résulte du pivotement de la partie inférieure de la bague 3 lors du démoulage de la saillie interne 13 (voir figure 1). Le préformage consiste donc à réaliser une déformation rémanente de la bague 3 accompagnée d'un cintrage qui se produit selon la ligne circulaire L située sur la bande de jonction à déformation contrôlée 18.

Il est également possible de réaliser, dans certains cas, le cintrage de la bande 18 sous forme rémanente pour obtenir un degré de préformage plus important.

L'inclinaison rémanente δ de la face supérieure 13a de la saillie interne 13 par rapport à la normale N à l'axe la est inférieure ou égale à 25° et est de préférence comprise entre 10° et 15°.

Il en résulte que la face latérale extérieure de la partie inférieure de la bague 3 reste légèrement inclinée d'un angle ϕ compris entre 0° et 15° vers et par rapport à l'axe la du bouchon 2 ce qui améliore également l'inviolabilité en réduisant après bouchage du récipient, l'espace libre entre le bord inférieur de la bague et le col dudit récipient.

La force, la durée de l'effort d'appui E,E' ainsi que la course relative du mandrin M sont déterminées en fonction des caractéristiques mécaniques de la matière constitutive de la bague d'inviolabilité 3 et/ou en fonction de la température de ladite bague 3 au moment du préformage et/ou du profil et de la géométrie de la bague.

La force, la durée de l'effort d'appui E,E' et la course relative du mandrin M dépendent donc aussi des géométries respectives de la saillie annulaire 13 et de la bande de jonction 18 à déformation contrôlée par rapport aux profils des collerettes de récipients.

Pour des profils et/ou des qualités particulières de ces collerettes, on adaptera le cas échéant la durée de l'effort d'appui E,E' et/ou la course relative du mandrin M pour garantir une déformation contrôlée uniforme de la bande de jonction 18 sans rupture de la zone de liaison frangible 4.

Bien entendu, la durée de l'effort d'appui est supérieure ou égale au temps de maintien de la came C du mandrin M en position de préformage, au contact de la saillie annulaire interne 13.

Généralement, l'effort d'appui est de l'ordre de 10 à 100 daN et le temps de maintien est compris entre 0,3 et 5s.

De préférence, la matière constitutive de la bague 3 est une matière plastique à mémoire de forme du type polypropylènes ou polyéthylènes.

Le préformage peut s'analyser comme une orientation sélective et rémanente des chaînes moléculaires du matériau polymère constitutif de la bague, facilitant et améliorant ensuite la déformation contrôlée de la bande 18 lors du vissage du dispositif au bouchage.

Au vissage sur le récipient après embouteillage, la bague d'inviolabilité préformée subira alors, avec un couple limité, la déformation nécessaire à l'encliquetage sous la collerette même si elle possède une grande rigidité et un profil d'accrochage très prononcé.

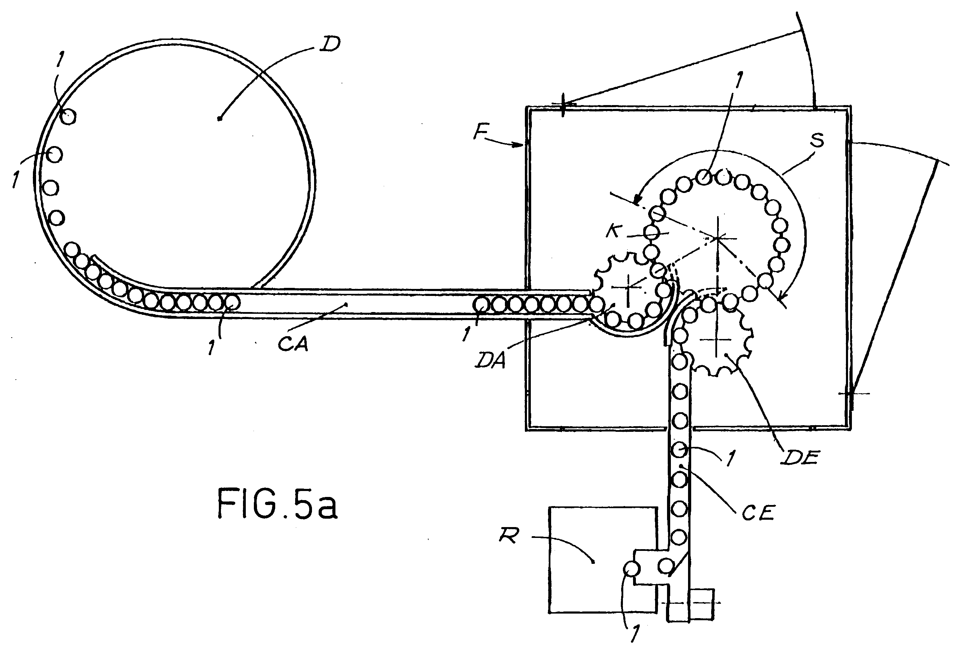

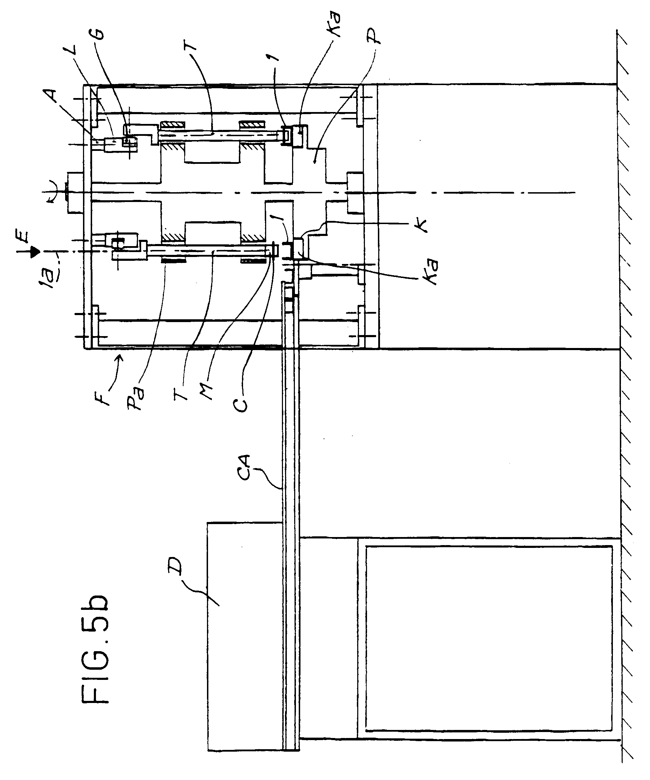

La machine pour la mise en oeuvre continue du préformage telle que représentée sur les figures 5a et 5b comprend un distributeur D de dispositifs de bouchage 1 avec leur bague d'inviolabilité, des convoyeurs CA,CE destinés à transférer respectivement, les dispositifs 1 d'abord du distributeur D à une unité de préformage F puis de ladite unité F à un réceptacle R de stockage.

Le distributeur D peut, le cas échéant, être alimenté directement par les dispositifs sortant du moule.

L'unité de préformage F comprend un plateau P rotatif autour d'un axe vertical, porteur d'une matrice K de support et de positionnement des dispositifs 1 pour les maintenir fermement avec la bague 3 vers le haut. On pourra également prévoir que la matrice K et le plateau P sont réalisés d'une seule pièce. L'unité de préformage F comprend, en outre, des tiges verticales T, coulissant au travers de paliers Pa et dont les extrémités inférieures portent un mandrin cylindrique M équipé d'une came périphérique annulaire. Le mandrin M est destiné à être introduit par le haut dans les dispositifs 1 sous l'action de l'effort d'appui E exercé verticalement selon l'axe la par les tiges T parallèlement à l'axe de rotation du plateau P

La descente des tiges T avec leur mandrin M met la came C au contact de la saillie annulaire interne 13 de la bague 3 des dispositifs 1 comme décrit précédemment.

La phase de préformage correspond à un secteur angulaire S de la matrice K où les tiges T sont en position basse avec la came C du mandrin M en appui sur la saillie interne de la bague.

La rotation du plateau P avec la matrice K supportant les dispositifs 1, s'effectue de façon continue.

Un système avec galet G, came de roulement L, et cale de réglage A permet d'obtenir une butée mécanique du mandrin M en position basse (figure 5b partie droite).

La rotation du galet G, en suivant le profil de la came de roulement L, assure successivement la transmission de l'effort d'appui E, la course descendante des tiges T avec le mandrin M, le maintien de la came C en position de préformage pendant un temps correspondant au parcours du secteur S par le dispositif 1, puis la course ascendante de remontée du mandrin M.

La matrice K est constituée d'un disque comportant plusieurs alvéoles périphériques Ka dans lesquelles sont logés, centrés et retenus fermement les bouchons des dispositifs 1.

La matrice K est associée par synchronisation mécanique à des roues dentées rotatives DA,DE respectivement pour l'alimentation et l'évacuation, travaillant en ligne avec les convoyeurs CA, CE.

## Revendications

1. Procédé de fabrication d'un dispositif de bouchage (1) pour récipient à collerette constitué d'un bouchon taraudé (2) prolongé en partie inférieure par une bague d'inviolabilité (3) reliée au bouchon (2) par une zone de liaison frangible (4); cette bague (3) comportant une bande annulaire de jonction (18) à déformation contrôlée, délimitée d'une part, en partie inférieure par une saillie annulaire interne (13) dont la face supérieure (13a) est sensiblement normale à l'axe (1a) du dispositif (1) et la face inférieure (13b) est inclinée d'un angle aigu (a) par rapport audit axe (1a) et, d'autre part, en partie supérieure, par une saillie annulaire externe (7), le procédé comprenant le moulage dudit dispositif (1), son démoulage puis son éjection parallèlement à son axe (1a),
caractérisé en ce qu'on réalise ensuite un préformage de la bague d'inviolabilité (3)
- en introduisant axialement dans ledit dispositif (1), un mandrin cylindrique (M) dont le diamètre est légèrement inférieur au diamètre intérieur des filets (21) du bouchon taraudé (2) et qui est pourvu d'une came périphérique annulaire (C) telle que la face inférieure (13b) de la saillie annulaire interne (13) vienne en butée contre ladite came (C) puis
- en exerçant sur ledit dispositif et/ou sur le mandrin M un effort d'appui (E,E') dont la force est suffisante pour assurer une course relative du mandrin dans le dispositif au contact de la came (C) jusqu'à une position de préformage maintenue pendant un temps déterminé de façon à produire conjointement un cintrage vers l'extérieur de la bande (18) à déformation contrôlée et une flexion rémanente vers le bouchon (2) de la saillie annulaire interne (13) de telle sorte que sa face supérieure (13a) reste inclinée d'un angle (δ) par rapport à la normale (N) à l'axe (1a) du dispositif, après suppression de l'effort (E,E') et sortie du mandrin (M).

2. Procédé selon la revendication 1, caractérisé en ce qu'on réalise le préformage à chaud sur le dispositif dès son éjection du moule.

3. Procédé selon la revendication 1, caractérisé en ce qu'on réalise le préformage après éjection du moule pendant ou après refroidissement et retrait complet de la matière constitutive de la bague (3).

4. Procédé selon l'une des revendications précédentes, caractérisé en ce que l'amplitude du préformage est déterminée de façon à au moins compenser la déformation initiale (ϕₒ) produite lors de l'éjection du moule.

5. Procédé selon l'une des revendications précédentes, caractérisé en ce que la force, la durée de l'effort d'appui (E,E') ainsi que la course relative du mandrin (M) sont déterminées en fonction des caractéristiques mécaniques de la matière constitutive de la bague (3).

6. Procédé selon l'une des revendications précédentes, caractérisé en ce que la force, la durée de l'effort d'appui (E,E') ainsi que la course relative du mandrin (M) sont déterminées en fonction de la température de la bague (3) au moment du préformage.

7. Procédé selon l'une des revendications précédentes, caractérisé en ce que la course relative du mandrin (M) et son temps de maintien en position de préformage sont déterminés selon les géométries respectives de la saillie annulaire interne (13) et de la bande de jonction (18) à déformation contrôlée par rapport aux profils des collerettes de récipients.

8. Procédé selon l'une des revendications précédentes, caractérisé en ce que l'inclinaison rémanente (δ) de la face supérieure (13a) de la saillie annulaire interne (13) par rapport à la normale (N) à l'axe (1a) du dispositif est inférieure ou égale à 25° et est de préférence comprise entre 10° et 15°.

9. Procédé selon l'une des revendications précédentes, caractérisé en ce que l'inclinaison rémanente (ϕ) de la face latérale extérieure de la partie inférieure de la bague (3) est comprise entre 0° et 15° vers et par rapport à l'axe (1a) du dispositif (1).

10. Procédé selon l'une des revendications précédentes, caractérisé en ce que le cintrage se produit selon une ligne circulaire (L) située sur la bande de jonction (18) à déformation contrôlée en assurant une orientation sélective des chaînes moléculaires du polymère constitutif de la bague sur cette ligne.

11. Procédé selon l'une des revendications précédentes, caractérisé en ce que l'effort d'appui (E,E') est exercé sur le bouchon (2) et/ou sur le mandrin (M) avec une durée supérieure ou égale au temps de maintien en position de préformage.

12. Procédé selon l'une des revendications précédentes, caractérisé en ce que l'effort d'appui est compris entre 10 et 100 daN et le temps de maintien du mandrin (M) en position de préformage est compris entre 0,3 et 5s.

13. Procédé selon l'une des revendications précédentes, caractérisé en ce qu'on utilise comme matière constitutive du dispositif (1) une matière plastique à mémoire de forme.

14. Machine pour la mise en oeuvre continue d'un procédé et notamment d'un préformage selon l'une des revendications précédentes du type comprenant un distributeur (D) de dispositifs de bouchage (1) avec leur bague d'inviolabilité (3), des convoyeurs (CA,CE) destinés à transférer respectivement lesdits dispositifs (1) d'abord du distributeur (D) à une unité de préformage (F) puis de ladite unité (F) à un réceptacle (R), ladite unité de préformage (F) comprenant :
- un plateau (P) rotatif autour d'un axe vertical porteur d'une matrice (K) de support et de positionnement des dispositifs (1) destinée à les maintenir fermement avec la bague d'inviolabilité (3) vers le haut ;
- des tiges verticales (T) coulissantes au travers de paliers (Pa) et dont les extrémités inférieures portent un mandrin cylindrique (M) équipé d'une came (C) périphérique annulaire, destiné à être introduit dans lesdits dispositifs (1) sous l'action de l'effort d'appui (E,E') exercé par les tiges (T) pour mettre ladite came (C) au contact de la saillie annulaire interne (13) de la bague (3).

15. Machine selon la revendication 14, caractérisé en ce que ladite matrice (K) de support et de positionnement est constituée d'un disque comportant plusieurs alvéoles périphériques (Ka) dans lesquelles sont logés, centrés et retenus les bouchons (2) des dispositifs de bouchage (1).

16. Machine selon la revendication 14 ou 15, caractérisé en ce que la phase de préformage correspond à un secteur angulaire (S) de ladite matrice (K).

17. Machine selon l'une des revendications 14 à 16 caractérisée en ce que l'extrémité du mandrin (M) est chanfreinée et son profil et sa géométrie sont déterminés en fonction de la position de la came (C) pour ne jamais venir en contact ni avec le fond, ni avec les parois intérieures du bouchon (2) lors du préformage.

18. Machine selon l'une des revendications 14 à 17, caractérisée en ce que ladite came périphérique annulaire (C) possède une partie utile constituée d'une face active plane et inclinée (C1) à bord latéral curviligne (C2) se prolongeant par une face inactive (C3) dont les profils et les géométries sont adaptés à la face inférieure (13b) de la saillie interne (13) de la bague (3).

19. Machine selon l'une des revendications 14 à 18, caractérisée en ce que ladite matrice (K) de support et de positionnement est associée par synchronisation mécanique à des roues dentées rotatives d'alimentation (DA) et d'évacuation (DE) travaillant en ligne avec les convoyeurs (CA,CE).

## Claims

1. A method of manufacturing a stopper device (1) for a collared receptacle, the device being constituted by a screw cap (2) extended downwards by a tamperproofing ring (3) connected to the cap (2) by a frangible link zone (4); the ring (3) including a controlled deformation annular junction strip (18) defined firstly at the bottom by an internal annular projection (13) whose top face (13a) is substantially normal to the axis (1a) of the device (1) and whose bottom face (13b) is inclined at an acute angle (α) relative to said axis (1a), and secondly, at the top, by an external annular projection (7), the method comprising molding said device (1), unmolding it, and then ejecting it parallel to its axis (1a),
the method being characterized in that the tamperproofing ring (3) is subsequently pre-formed:
• by inserting a cylindrical mandrel (M) axially into said device (1), the diameter of the mandrel being slightly less than the inside diameter of the threads (21) of the screw cap (2), and the mandrel being provided with an annular peripheral cam (C) such that the bottom face (13b) of the internal annular projection (13) comes into abutment against said cam (C); and then
• by exerting on said device and/or on the mandrel (M) a thrust force (E, E') of magnitude sufficient for ensuring a relative stroke of the mandrel in the device linda in contact with the cam (C) to a pre-forming position that is maintained for a determined length of time so as to produce simultaneously outward curving of the controlled deformation strip (18) and remanent bending towards the cap (2) of the internal annular projection (13) such that the top face (13a) thereof remains inclined at an angle (δ) relative to the normal (N) to the axis (1a) of the device, after the force (E, E') has been eliminated and the mandrel (M) removed.

2. A method according to claim 1, characterized in that the pre-forming is performed on the device while it is hot as soon as it is ejected from the mold.

3. A method according to claim 1, characterized in that the pre-forming is performed after ejection from the mold during or after cooling and full shrinkage of the material constituting the ring (3).

4. A method according to any preceding claim, characterized in that the amplitude of the pre-forming is determined so that it compensates at least for the initial deformation (φ₀) produced during ejection from the mold.

5. A method according to any preceding claim, characterized in that the magnitude and the duration of the thrust force (E, E'), and the relative stroke of the mandrel (M) are determined as a function of the mechanical characteristics of the material constituting the ring (3).

6. A method according to any preceding claim, characterized in that the magnitude and the duration of the thrust force (E, E'), and the relative stroke of the mandrel (M) are determined as a function of the temperature of the ring (3) at the time of pre-forming.

7. A method according to any preceding claim, characterized in that the relative stroke of the mandrel (M) and the time during which it is maintained in the pre-forming position are determined depending on the relative shapes of the internal annular projection (13) and of the controlled deformation junction strip (18) compared with the profiles of the collars of the receptacles.

8. A method according to any preceding claim, characterized in that the remanent inclination (δ) of the top face (13a) of the internal annular projection (13) relative to the normal (N) to the axis (1a) of the device is less than or equal to 25°, and preferably lies in the range 10° to 15°.

9. A method according to any preceding claim, characterized in that the remanent inclination (φ) of the outside face of the bottom portion of the ring (3) lies in the range 0° to 15° towards and relative to the axis (1a) of the device (1).

10. A method according to any preceding claim, characterized in that the curving takes place along a circular line (L) situated on the controlled deformation junction strip (18) by selectively orienting the chains of the polymer molecules constituting the ring on said line.

11. A method according to any preceding claim, characterized in that the thrust force (E, E') is exerted on the cap (2) and/or on the mandrel (M) for a duration that is greater than or equal to the time during which the pre-forming position is maintained.

12. A method according to any preceding claim, characterized in that the thrust force lies in the range 10 daN to 100 daN and the time during which the mandrel (M) is maintained in the pre-forming position lies in the range 0.3 s to 5 s.

13. A method according to any preceding claim, characterized in that the component material of the device (1) is a plastics material having shape memory.

14. A machine for continuously implementing a method, and in particular a pre-forming method according to any preceding claim, the machine being of the type comprising a dispenser (D) of stopper devices (1) together with their tamperproofing rings (3), conveyors (CA, CE) respectively for transferring said devices (1) firstly from the conveyor (D) to a pre-forming unit (F) and then from the said unit (F) to a receptacle (R), said pre-forming unit (F) comprising:
• a turntable (P) rotatable about a vertical axis and carrying a matrix (K) for supporting and positioning the devices (1) for the purpose of holding them securely with their tamperproofing rings (3) on top; and
• vertical rods (T) slidable through bearings (Pa) and having bottom ends carrying respective cylindrical mandrels (M) each fitted with an annular peripheral cam (C) designed to be inserted into said devices (1) under the action of a thrust force (E, E') exerted by the rods (T) to put said cam (C) into contact with the internal annular projections (13) of the rings (3).

15. A machine according to claim 14, characterized in that said support and positioning matrix (K) is constituted by a disk having a plurality of peripheral cells (Ka) in which the caps (2) of the stopper devices (1) are received, centered, and retained.

16. A machine according to claim 14 or 15, characterized in that the pre-forming stage corresponds to an angular sector (S) of said matrix (K).

17. A machine according to any one of claims 14 to 16, characterized in that the end of the mandrel (M) is chamfered and its profile and shape are determined as a function of the position of the cam (C) so that contact is never made with the top or the inside walls of the cap (2) during pre-forming.

18. A machine according to any one of claims 14 to 17, characterized in that said annular peripheral cam (C) possesses a working portion constituted by a plane active face and inclined (C1) to a curvilinear edge (C2) extended by an inactive face (C3) whose profiles and shapes are adapted to the inside face (13b) of the internal projection (13) of the ring (3).

19. A machine according to any one of claims 14 to 18, characterized in that said support and positioning matrix (K) is associated by mechanical synchronization with rotary sprocket wheels (DA, DE) operating in line with the conveyors (CA, CE) for feed and removal purposes.

## Patentansprüche

1. Verfahren zur Herstellung einer Abdichtungsvorrichtung (1) für einen Kragenbehälter bestehend aus einem Verschluß (2) mit Innengewinde, der im unteren Teil durch einen Sicherheitsring (3) verlängert ist, der mit dem Verschluß (2) durch eine brechbare Verbindungszone (4) verbunden ist; wobei dieser Ring (3) aus einem ringförmigen Verbindungsband (18) mit kontrollierter Verformung besteht, begrenzt einerseits, am unteren Teil, durch einen inneren ringförmigen Vorsprung (13), dessen obere Fläche (13a) gegenüber der Achse (1a) der Vorrichtung (1) im wesentlichen senkrecht verläuft und dessen Unterseite (13b) zu genannter Achse (1a) im spitzen Winkel (a) geneigt ist, und, andererseits, am oberen Teil, durch einen äußeren ringförmigen Vorsprung (7), wobei das Verfahren die Abformung der genannten Vorrichtung (1), sein Ausformen und schließlich sein Ausdrücken parallel zu seiner Achse (1a) beinhaltet,
dadurch gekennzeichnet, daß anschließend eine Vorformung des Sicherheitsringes (3) durchgeführt wird
- durch axiales Einführen (1) eines zylindrischen Kerns (M) in die genannte Vorrichtung, dessen Durchmesser etwas kleiner ist als der Innendurchmesser der Innengewinde (21) Verschlusses (2) und der mit einer ringförmigen Umfangsnocke (C) versehen ist, so daß die untere Fläche (13b) des inneren ringförmigen Vorsprungs (13) gegen die genannte Nocke (C) zum Anschlag kommt, dann
- durch Ausüben eines Druckes (E, E') auf die genannte Vorrichtung und / oder auf den Kern M, dessen Kraft ausreicht, um beim Kontakt mit der Nocke (C) einen relativen Lauf des Kerns in der Vorrichtung bis zu einer zur Vorformungsposition zu gewährleisten, die über eine bestimmte Zeit beibehalten ist, so daß gleichzeitig ein Biegen des Bandes (18) mit kontrollierter Verformung (18) nach außen hin und eine remanente Durchbiegung zum Verschluß (2) des inneren ringförmigen Vorsprungs (13) derart herzustellen, daß die obere Fläche (13a) im Vergleich zur Normale (N) gegenüber der Achse (1a) der Vorrichtung in einem Winkel (d) geneigt bleibt, nachdem der Druck (E, E') entfernt und der Kern (M) herausgenommen wird.

2. Verfahren nach Anspruch 1, dadurch gekennzeichnet, daß auf der Vorrichtung bereits bei ihrem Ausdrücken aus der Form eine Vorformung unter Hitzeeinwirkung vorgenommen wird.

3. Verfahren nach Anspruch 1, dadurch gekennzeichnet, daß die Vorformung nach dem Ausdrücken aus der Form während oder nach dem Abkühlen und dem vollständigen Entfernen des den Ring (3) bildenden Materials vorgenommen wird.

4. Verfahren nach einem der vorhergehenden Ansprüche, dadurch gekennzeichnet, daß die Amplitude der Vorformung derart bestimmt wird, daß sie zumindest die ursprüngliche Verformung φ₀ ausgleicht, die bei dem Ausdrücken aus der Form entstanden ist.

5. Verfahren nach einem der vorhergehenden Ansprüche, dadurch gekennzeichnet, daß die Kraft, die Dauer des Drucks (E, E') sowie der relative Lauf des Kerns (M) im Hinblick auf die mechanischen Eigenschaften des den Ring (3) bildenden Materials festgelegt werden.

6. Verfahren nach einem der vorhergehenden Ansprüche, dadurch gekennzeichnet, daß die Kraft, die Dauer des Drucks (E, E') sowie der relative Lauf des Kerns (M) im Hinblick auf die Temperatur des Rings (3) zum Zeitpunkt der Vorformung festgelegt werden.

7. Verfahren nach einem der vorhergehenden Ansprüche, dadurch gekennzeichnet, daß der relative Lauf des Kerns (M) und die Zeit, während derer er in der Vorformungsposition verbleibt, gemäß der jeweiligen Geometrie des inneren ringförmigen Vorsprungs (13) und des Verbindungsbandes (18) mit kontrollierter Verformung im Verhältnis zu den Profilen der Kragen der Behälter festgelegt werden.

8. Verfahren nach einem der vorhergehenden Ansprüche, dadurch gekennzeichnet, daß die remanente Neigung (d) der oberen Fläche (13a) des inneren ringförmigen Vorsprungs (13) im Verhältnis zu der Normale (N) der Achse (1a) der Vorrichtung kleiner als oder gleich 25° ist und vorzugsweise zwischen 10° und 15° liegt.

9. Verfahren nach einem der vorhergehenden Ansprüche, dadurch gekennzeichnet, daß die remanente Neigung (d) der seitlichen Außenfläche des inneren Teils des Rings (3) zwischen 0° und 15° im Verhältnis und in Richtung zu der Achse (1a) der Vorrichtung (1) liegt.

10. Verfahren nach einem der vorhergehenden Ansprüche, dadurch gekennzeichnet, daß das Biegen gemäß einer kreisförmigen Linie (L) erfolgt, die sich auf dem Verbindungsband (18) mit kontrollierter Verformung befindet und dabei eine selektive Ausrichtung der Molekülketten des Polymers gewährleistet, das den Ring auf dieser Linie bildet.

11. Verfahren nach einem der vorhergehenden Ansprüche, dadurch gekennzeichnet, daß der Druck (E, E') auf den Verschluß (2) und / oder den Kern (M) über eine Zeitdauer ausgeübt wird, die gleich oder höher als die Zeitdauer der Beibehaltung in der Vorformungsposition ist.

12. Verfahren nach einem der vorhergehenden Ansprüche, dadurch gekennzeichnet, daß der Druck zwischen 10 und 100 daN liegt und die Zeit, während derer der Kern (M) in der Vorformungsposition gehalten wird, zwischen 0,3 und 5 Sekunden liegt.

13. Verfahren nach einem der vorhergehenden Ansprüche, dadurch gekennzeichnet, daß als das die Vorrichtung (1) bildende Material rückverformbarer Kunststoff eingesetzt wird.

14. Maschine für die kontinuierliche Durchführung eines Verfahrens und insbesondere einer Vorformung nach einem der vorhergehende Ansprüche von der Art, die einen Verteiler (D) von Abdichtungsvorrichtungen (1) mit dazugehörigem Sicherheitsring (3) und Fördereinrichtungen (CA, CE) beinhaltet, die dazu dienen, jeweils die genannten Vorrichtungen (1) zunächst vom Verteiler (D) zu einer Vorformungseinheit (F) zu überbringen, dann von der genannten Einheit (F) zu einer Auffangstation (R), wobei die so genannte Vorformungseinheit (F) die folgenden Elemente beinhaltet:
- einen Teller (P), der um eine vertikale Achse drehbar ist, die eine Matrize (K) zur Stützung und Positionierung der Vorrichtungen (1) frägt, die dazu dient, sie mit dem Sicherheitsring (3) fest nach oben zu halten;
- vertikale (T), durch Lager (Pa) verschiebbare Stäbe, deren untere Enden einen zylinderförmigen Kern (M) tragen, der mit einer ringförmigen Umfangsnocke (C) bestückt ist und dazu dient, in die genannten Vorrichtungen (1) unter Ausübung des durch die Stäbe (T) ausgeübten Druckes (E, E') eingeführt zu werden, um die genannte Nocke (C) mit dem inneren ringförmigen Vorsprung (13) des Ringes (3) in Kontakt zu bringen.

15. Maschine nach Anspruch 14, dadurch gekennzeichnet, daß die genannte Matrize (K) zur Stützung und zur Positionierung aus einer Scheibe besteht, die mehrere Umfangszellen (Ka) enthält, in denen die Verschlüsse (2) der Abdichtungsvorrichtung (1) zentriert gelagert und festgehalten werden.

16. Maschine nach Ansprüchen 14 oder 15, dadurch gekennzeichnet, daß die Verformungsphase einem winkelförmigen Ausschnitt (S) der genannten Matrize (K) entspricht.

17. Maschine nach einem der Ansprüche 14 bis 16, dadurch gekennzeichnet, daß das Ende des Kerns (M) angeschrägt ist und sein Profil und seine Geometrie im Hinblick auf die Position der Nocke (C) festgelegt werden, um bei der Vorformung niemals mit dem Boden oder mit den Innenwänden des Verschlusses (2) in Berührung zu kommen.

18. Maschine nach einem der Ansprüche 14 bis 17, dadurch gekennzeichnet, daß die genannte ringförmige Umfangsnocke (C) einen nutzbaren Teil besitzt, der aus einer aktiven ebenen und geneigten (C1) Fläche mit einen gekrümmtem (C2) Seitenrand besteht, der sich durch eine inaktive Fläche (C3) verlängert, deren Profile und deren Geometrie an die untere Fläche (13b) des inneren Vorsprungs (13) des Ringes angepaßt sind.

19. Maschine nach einem der Ansprüche 14 bis 18, dadurch gekennzeichnet, daß die genannte Matrize (K) zur Stützung und Positionierung durch mechanische Synchronisation drehbaren Zahnrädern zur Versorgung (DA) und zur Entleerung (DE) zugeordnet ist, die mit den Fördereinrichtungen (CA, CE) in einer Linie arbeiten.
